# FASCICULE DE BREVET EUROPEEN

(11) **EP 2 010 405 B1**
(45) Date de publication et mention de la délivrance du brevet: **30.12.2009**
(21) Numéro de dépôt: 07731312.0
(22) Date de dépôt: 18.04.2007
(51) Int. Cl.: B60J 7/19, B60J 7/14

(54) **DISPOSITIF DE VERROUILLAGE D'UN TOIT ESCAMOTABLE ET VEHICULE EQUIPE D'UN TEL SYSTEME**
VORRICHTUNG ZUM VERRIEGELN EINES VERSENKBAREN DACHS UND MIT SOLCH EINEM SYSTEM AUSGESTATTETES FAHRZEUG
DEVICE FOR LOCKING A RETRACTABLE ROOF, AND VEHICLE EQUIPPED WITH SUCH A SYSTEM

(30) Priorité: 21.04.2006 FR 0651408; 27.07.2006 FR 0606901
(43) Date de publication de la demande: 07.01.2009
(73) Titulaire: Heuliez, 79140 Cerizay (FR); RENAULT S.A.S., 92100 Boulogne Billancourt (FR)
(72) Inventeur: GUETET, David, 79320 Moncoutant (FR)
(74) Mandataire: Novagraaf IP
(86) Numéro de dépôt international: PCT/FR2007/000648
(87) Numéro de publication internationale: WO 2007/122318

(56) Documents cités:
- WO-A-2006/013249
- FR-A1- 2 859 413
- FR-A1- 2 870 788

## Description

L'invention concerne un dispositif de verrouillage d'un toit escamotable composé d'un élément de toit avant et d'un élément de toit arrière, permettant de verrouiller l'élément de toit avant sur l'élément de toit arrière. L'invention concerne également un système de verrouillage d'un toit escamotable comprenant un dispositif de verrouillage permettant d'assujettir l'élément de toit avant à une partie fixe du véhicule et un dispositif de verrouillage de l'élément de toit avant sur l'élément de toit arrière.

L'invention concerne aussi un véhicule équipé d'un tel système de verrouillage.

Dans l'art antérieur, il est connu des systèmes de verrouillage d'un toit escamotable composés d'au moins un élément de toit avant et un élément de toit arrière, permettant de verrouiller ensemble les éléments de toit avant et arrière et l'élément de toit avant sur une partie fixe de la carrosserie du véhicule.

Un système de ce type est notamment décrit dans la demande de brevet FR 2 870 788 au nom de la demanderesse.

Cependant les systèmes de l'art antérieur possèdent des inconvénients.

En effet, le dispositif de verrouillage de l'élément de toit avant sur l'élément de toit arrière ne permet pas d'exercer une force de verrouillage importante.

En outre, les systèmes ne sont pas particulièrement adaptés aux toits escamotables équipés d'un élément de toit arrière comprenant un élément de toit arrière central et des éléments latéraux formant custodes.

En effet, la particularité du verrouillage de ce type de toit réside dans le fait que les éléments latéraux sont mobiles par rapport à l'élément central. Ainsi, le dispositif de verrouillage doit permettre un verrouillage des éléments latéraux dans une position exacte. En effet, il est important d'assurer un positionnement relatif précis des éléments de toit afin de garantir une continuité des lignes de carrosserie du toit et sa rigidité structurelle.

Par ailleurs, les systèmes connus sont complexes, encombrants et ne permettent pas de bloquer le verrouillage de façon totalement fiable. Ainsi, les organes mobiles de verrouillage peuvent se déplacer vers leur position déverrouillée lorsqu'une force extérieure leur est appliquée, lors par exemple d'un choc appliqué sur le toit escamotable.

En outre, la force de l'actionneur est généralement appliquée transversalement au toit escamotable alors que la résistance transversale du toit est faible. Ainsi, la force de verrouillage est limitée.

L'invention vise donc à remédier à ces problèmes en proposant un dispositif et un système de verrouillage simples et compacts permettant d'appliquer une force de verrouillage importante afin d'assurer une bonne tenue du toit et permettant également d'assurer un positionnement précis des éléments de toit.

L'invention vise également à réaliser un dispositif et un système de verrouillage pouvant être bloqués de façon fiable en position de verrouillage de manière à ce que l'organe mobile de verrouillage ne se déplace vers sa position déverrouillée que lors d'un mouvement délibéré de l'actionneur.

Enfin, le dispositif de verrouillage selon l'invention vise également à permettre un positionnement précis du toit escamotable par rapport au véhicule

Selon un premier aspect, l'invention concerne un dispositif de verrouillage d'un toit escamotable de véhicule automobile composé d'au moins un élément de toit avant et d'un élément de toit arrière, l'élément de toit avant étant monté articulé sur l'élément de toit arrière et l'élément de toit arrière étant monté articulé sur le châssis du véhicule, les éléments de toit avant et arrière étant mobiles entre une position de recouvrement de l'habitacle du véhicule et une position escamotée vers le coffre arrière du véhicule, l'élément de toit arrière comprenant un élément central et deux éléments latéraux disposés de part et d'autre de l'élément central et montés articulés sur celui-ci.

Le dispositif de verrouillage comprend :
- une gâche solidaire d'un élément de toit latéral ;
- un doigt de verrouillage monté articulé sur un support solidaire de l'élément de toit avant entre une position déverrouillée et une position verrouillée dans laquelle ledit doigt exerce sur la gâche une force selon un axe Z dirigé vers le bas de manière à plaquer l'élément de toit latéral vers sa position de recouvrement en appui sur l'élément central et/ou sur l'élément avant.

Ainsi, la force de verrouillage peut être importante et le dispositif de verrouillage est particulièrement adapté à un toit escamotable équipé de deux éléments de toits latéraux formant custodes.

Avantageusement, le dispositif de verrouillage comprend en outre un premier et un second organe de positionnement respectivement solidaire de l'élément de toit avant et solidaire de l'élément de toit latéral ; le second organe venant en appui sur une zone d'appui du premier organe sous l'effet de ladite force de verrouillage lorsque les éléments de toit sont en position de recouvrement, la zone d'appui étant traversée par l'axe Z et sensiblement perpendiculaire à celui-ci.

Ainsi, le premier organe de positionnement forme un appui de l'élément latéral sur l'élément de toit avant.

En outre, le premier et le second organe de positionnement permettent un positionnement relatif précis des éléments de toit.
Enfin, la zone d'appui traversée par l'axe Z et sensiblement perpendiculaire à celui-ci permet de garantir une bonne tenue du toit sans déformation de celui-ci.

Avantageusement, l'axe Z est centré sur la zone d'appui du premier organe de positionnement.

Avantageusement, la gâche forme le second organe de positionnement, le doigt de verrouillage contraignant la gâche contre le premier organe de positionnement lorsque ledit doigt est en position verrouillée. Ainsi le nombre d'éléments constituant le dispositif est limité.

Dans un mode de réalisation, la gâche possède sensiblement une forme de U dont les branches sont solidaires de l'élément de toit arrière. Le premier organe possède un fond formant une zone d'appui de la gâche et des bords latéraux évasés permettant de positionner latéralement la gâche afin de positionner latéralement l'élément de toit arrière par rapport à l'élément de toit avant. La zone d'appui de la gâche permet de positionner verticalement l'élément de toit arrière par rapport à l'élément de toit avant.

Dans un premier mode de réalisation, le doigt est monté coulissant sur le support. Le doigt coulissant possède une glissière et le support possède deux pions de guidage engagés dans ladite glissière afin de guider le mouvement du doigt coulissant.

Avantageusement, le doigt coulissant possède une surface de contact avec la gâche qui est biseautée.

Dans un second mode de réalisation, le doigt est monté en rotation sur le support. Le doigt possède une glissière et le support possède au moins une glissière, un axe commandé par ledit actionneur étant mobile à la fois dans la glissière du doigt et dans la glissière du support.

Dans un mode de réalisation, le support est composé de deux plaques fixées l'une à l'autre dans une partie avant et s'écartant dans une partie arrière afin de former un logement pour le doigt de verrouillage. Ainsi, le dispositif est compact.

Selon un deuxième aspect, l'invention concerne également un système de verrouillage d'un toit escamotable de véhicule automobile comprenant :
- un dispositif de verrouillage arrière de l'élément de toit avant sur l'élément de toit arrière comprenant :
   - un support arrière solidaire de l'élément de toit avant disposé à proximité de son bord arrière ;
   - une gâche solidaire de l'élément de toit arrière ;
   - un doigt de verrouillage monté articulé sur ledit support arrière entre une position déverrouillée et une position verrouillée sur la gâche ;
- un dispositif de verrouillage avant de l'élément de toit avant sur une partie fixe du véhicule comprenant :
   - un support avant solidaire de l'élément de toit avant et disposé à proximité de son bord avant ;
   - un organe de verrouillage monté articulé sur ledit support avant entre une position déverrouillée et une position verrouillée sur une gâche solidaire d'une partie fixe du véhicule.

Le dispositif de verrouillage avant ou le dispositif de verrouillage arrière est équipé d'un unique actionneur permettant de commander le mouvement de verrouillage de l'organe de verrouillage ou du doigt de verrouillage, ledit système de verrouillage comprenant en outre un dispositif de transmission du mouvement agencé pour transmettre le mouvement de l'actionneur du dispositif de verrouillage avant vers le dispositif de verrouillage arrière ou du dispositif de verrouillage arrière vers le dispositif de verrouillage avant.

Avantageusement, l'actionneur est logé à l'intérieur du dispositif de verrouillage avant ou arrière. Ainsi, le dispositif de verrouillage forme un ensemble compact.

Avantageusement, le dispositif de verrouillage avant comprend des moyens de transmission du mouvement de l'actionneur à l'organe de verrouillage, lesdits moyens de transmission étant agencés pour être disposés dans une position stable dans laquelle les moyens de transmission peuvent se déplacer vers leur position déverrouillée uniquement par un mouvement de l'actionneur, lorsque le dispositif de verrouillage avant est dans sa position verrouillée.

Selon un troisième aspect, l'invention concerne également un toit escamotable. Avantageusement, le toit escamotable comporte deux systèmes de verrouillage disposés à proximité des bords latéraux dudit toit escamotable. Ainsi la force de verrouillage peut être très importante car les bords latéraux du toit escamotable sont plus résistants que le reste du toit et peuvent éventuellement être renforcés.

Enfin, selon un quatrième aspect, l'invention concerne également un véhicule automobile équipé d'un toit escamotable selon le troisième aspect de l'invention.

D'autres objets et avantages de l'invention apparaîtront au cours de la description qui suit, faite en référence aux dessins annexés, dans lesquels :
- la figure 1 est une vue latérale d'un système de verrouillage selon un premier mode de réalisation de l'invention ;
- la figure 2 est une vue de dessus de la figure 1 représentant un système de verrouillage selon un premier mode de réalisation de l'invention ;
- la figure 3 est une vue détaillée du dispositif de verrouillage de l'élément de toit avant sur l'élément de toit arrière selon le premier mode de réalisation de l'invention ;
- la figure 4 est une vue en coupe selon le plan IV-IV de la figure 3 représentant de façon détaillée le premier organe de positionnement, le doigt de verrouillage et la gâche lorsque cette dernière forme le second organe de positionnement ;
- la figure 5 est une vue schématique en perspective d'un véhicule automobile équipé d'un toit comprenant un élément avant et un élément arrière composé d'un élément central et de deux éléments latéraux disposés de part et d'autre dudit élément central ;
- la figure 6 est une vue en perspective de dessus du toit escamotable de la figure 5 équipé d'un système de verrouillage selon l'invention ;
- la figure 7 est une vue latérale d'un système de verrouillage selon un second mode de réalisation de l'invention ;
- la figure 8 est une vue de dessus de la figure 7 représentant un système de verrouillage selon un second mode de réalisation ; et
- la figure 9 est une vue latérale une vue détaillée du dispositif de verrouillage de l'élément de toit avant sur l'élément de toit arrière selon un troisième mode de réalisation de l'invention ; et
- la figure 10 est une vue détaillée du doigt coulissant et de la gâche selon le troisième mode de réalisation de l'invention. ;

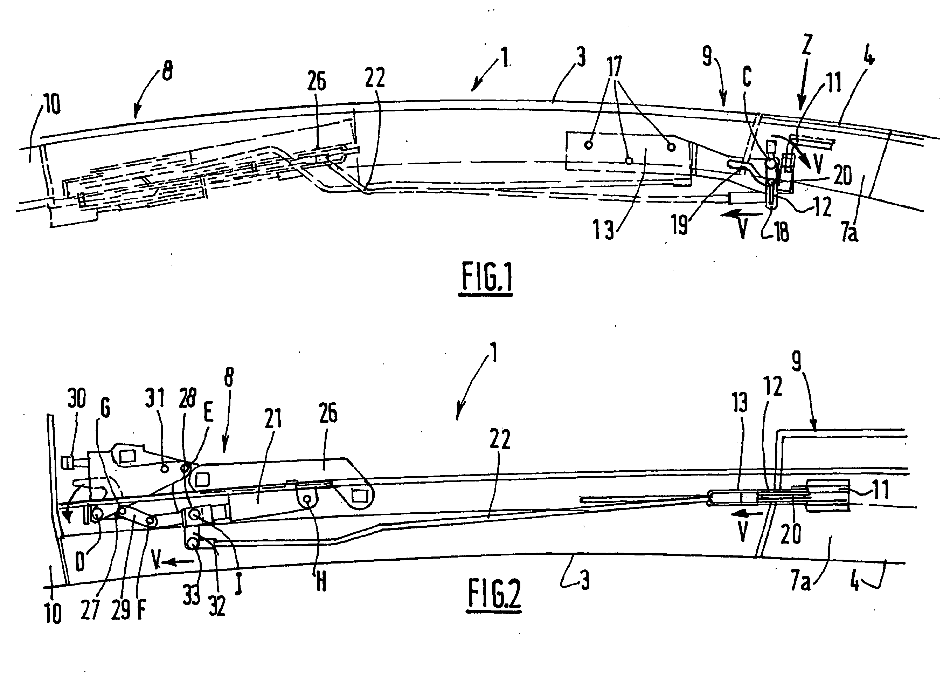

En relation avec les figures 1 à 8, on décrit un système de verrouillage 1 d'un toit escamotable ainsi qu'un véhicule automobile 2 possédant un toit escamotable équipé d'un tel système 1.

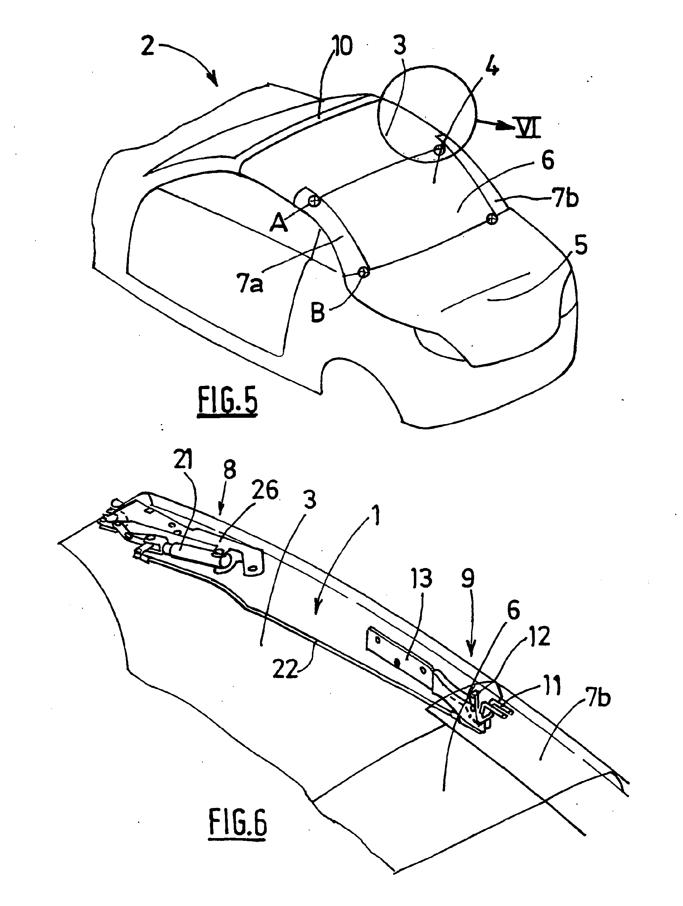

Le véhicule automobile 2 représenté sur la figure 5 est équipé d'un toit escamotable comprenant un élément de toit avant 3 et un élément de toit arrière 4. L'élément avant 3 est monté articulé sur l'élément de toit arrière 4 selon l'axe de rotation A et l'élément de toit arrière 4 est monté articulé sur le châssis du véhicule 2 selon l'axe de rotation B. Ainsi, les éléments de toit avant 3 et arrière 4 sont mobiles entre une position de recouvrement de l'habitacle du véhicule 2 et une position escamotée dans le coffre arrière 5 dans laquelle l'élément de toit avant 3 est replié sur l'élément de toit arrière 4.

Le déplacement des éléments de toit 3, 4 est commandé par deux bras latéraux, non représentés, montés d'une part articulés sur le châssis du véhicule 2 et d'autre part sur l'élément avant 3, à proximité de ces bords latéraux.

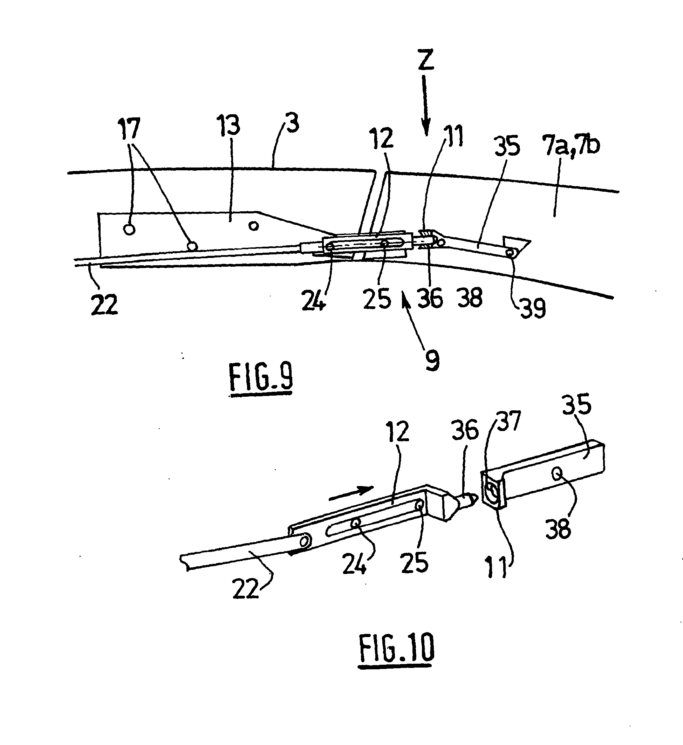

Dans le mode de réalisation représenté, l'élément de toit arrière 4 est composé d'un élément central 6 et d'éléments latéraux 7a, 7b. L'élément de toit arrière 4 est monté articulé sur l'élément de toit avant 3 par l'intermédiaire de l'élément de toit central 6 et les éléments latéraux 7a, 7b sont montés articulés sur l'élément central 6. Lorsque les éléments de toit 3, 4 sont en position de recouvrement (cf. figure 5), les éléments latéraux 7a, 7b sont disposés de part d'autre de l'élément de toit central 6 et lorsque les éléments de toit 3, 4 sont en position escamotée, l'élément de toit central 6 est décalé vers le haut par rapport aux éléments latéraux 7a, 7b afin d'augmenter l'espace disponible pour le rangement des bagages. La demande de brevet internationale WO 2006/013249 au nom de la demanderesse décrit de tel type de toit escamotable. Dans un mode de réalisation de l'invention décrit dans la demande de brevet français FR 2 872 456, les éléments latéraux 7a, 7b sont montés articulés sur l'élément de toit central 6 au moyen de biellettes 35 d'articulation (voir figure 9). Les biellettes d'articulation sont d'une part montées articulées en 38 sur l'élément de toit latéral 7a, 7b et d'autre part montées articulées en 39 sur l'élément de toit central 6

Afin d'immobiliser le toit escamotable lorsqu'il est dans sa position de recouvrement, le toit est équipé d'un système de verrouillage 1.

Avantageusement, le système de verrouillage 1 est composé d'un dispositif de verrouillage avant 8 du toit sur une partie fixe du véhicule, telle que la traverse 10 de pare-brise, et d'un dispositif de verrouillage arrière 9 de l'élément de toit avant 3 sur l'élément de toit arrière 4.

Le dispositif de verrouillage arrière 9 de l'élément de toit avant 3 sur l'élément de toit arrière est composé d'une gâche 11 solidaire de l'élément de toit arrière 4, d'un doigt de verrouillage 12 monté articulé sur un support 13 arrière solidaire de l'élément de toit avant 3 et d'un premier 14 et d'un second organe 11 de positionnement respectivement solidaire de l'élément de toit avant 3 et solidaire de l'élément de toit arrière 4.

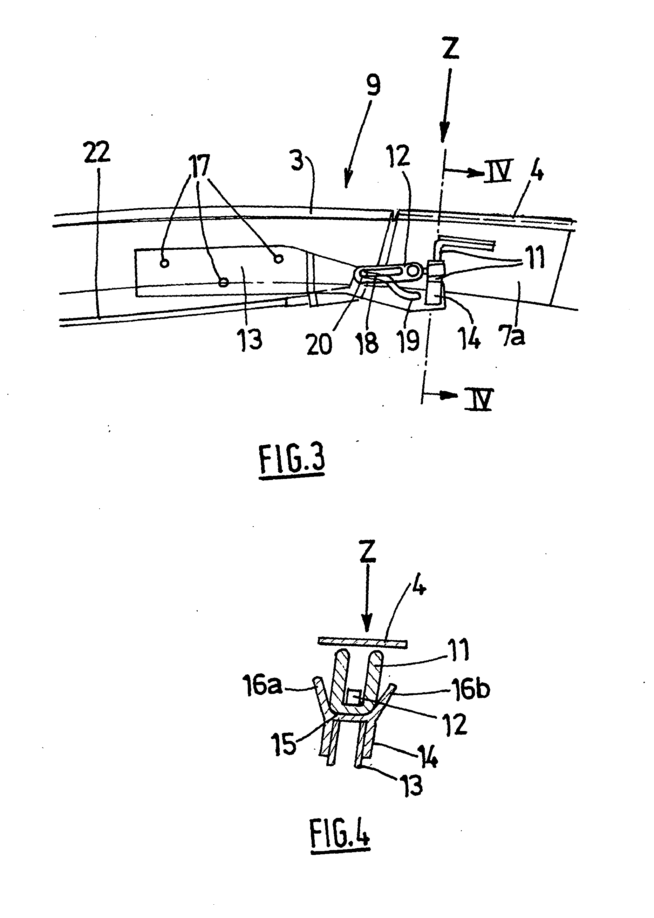

Dans un mode de réalisation représenté de façon détaillée sur la figure 4, la gâche 11 possède une forme de U dont les branches sont fixées sur un élément de toit latéral 7a, 7b. Afin d'améliorer la fixation de la gâche 11 à l'élément latéral 7a, 7b les branches possèdent une extrémité supérieure s'étendant vers l'arrière de l'élément latéral 7a, 7b .

Le doigt de verrouillage 12 est monté articulé sur le support 13 entre une position déverrouillée dans laquelle il n'exerce aucun contact avec la gâche 11 et une position verrouillée dans laquelle le doigt de verrouillage 12 exerce sur la gâche 11, au niveau du fond du U, une force selon un axe Z. Avantageusement, l'axe Z est sensiblement vertical.

En effet, lorsque les éléments latéraux 7a, 7b sont articulés sur l'élément de toit arrière central 6, ceux-ci 7a, 7b sont disposés légèrement au-dessus de l'élément de toit arrière 6, lorsque les éléments de toit 3, 4 approche de leur position de recouvrement. Par conséquent, il est important que le dispositif de verrouillage 9 exerce une force sensiblement verticale, du haut vers le bas, sur l'élément latéral 7a, 7b afin de l' entraîner et de le plaquer vers sa position de recouvrement en appui sur l'élément central arrière 6 et/ou sur le bord arrière de l'élément avant.3

Avantageusement, lorsque les éléments de toit 3, 4 sont en position de recouvrement, le second organe de positionnement 11 vient en appui sur une zone d'appui du premier organe 14. Le premier organe 14 forme une surface d'appui sensiblement perpendiculaire à l'axe Z. Ainsi, le second 11 et le premier organe 14 de positionnement permettent d'assurer un positionnement précis des éléments de toit 2, 3 afin d'assurer la continuité des lignes de carrosserie de ce toit. En outre, l'appui du second organe 11 sur le premier organe 14 autorise une force de verrouillage importante. Le premier organe 14 de positionnement est fixé sur le support 13 et repose sur les bords supérieurs des plaques du support 13.

Ainsi, on remarquera qu'un dispositif de verrouillage 9 selon l'invention est particulièrement approprié pour un toit escamotable comprenant des éléments latéraux 7a, 7b formant custodes.

Avantageusement, la gâche 11 forme le second organe 11 et lorsque le doigt 12 est en position verrouillée, il vient contraindre la gâche 11 contre le premier organe 14 de positionnement.

Le premier organe 14 de positionnement est composé d'un fond 15 et de deux bords latéraux 16a, 16b. Le fond 15 forme la zone d'appui du second organe 11 de positionnement (la gâche 11 dans le mode de réalisation représenté). Avantageusement, les bords latéraux 16a, 16b du premier organe de positionnement 15 sont évasés et permettent ainsi un positionnement latéral précis du second organe 11 par rapport au premier organe 14. Ainsi, le positionnement latéral de l'élément de toit arrière 4 est précis par rapport par rapport à l'élément de toit avant 3.

Le support 13 est composé de deux plaques rigides en tôles embouties. Dans une première partie avant, les plaques sont fixées l'une à l'autre et traversés par des orifices 17 permettant l'introduction d'organe de fixation afin de fixer le dispositif de verrouillage 9 sur le toit escamotable. Dans une seconde partie arrière, les plaques s'écartent et le doigt de verrouillage 12 est logé entre les deux plaques du support 13. Ainsi, le dispositif de verrouillage 9 forme un ensemble compact. En outre, les plaques sont disposées sensiblement verticalement contre le bord latéral du toit escamotable. Ainsi, l'encombrement latéral du dispositif de verrouillage 9 est limité. Ceci est particulièrement important dans la mesure ou l'articulation des bras d'actionnement sur l'élément de toit avant 3 se situe à proximité des bords latéraux arrière de l'élément de toit avant 3.

Dans un premier mode de réalisation représenté sur les figures 1, 2 3 et 6, le doigt de verrouillage 12 est un doigt monté en rotation sur le support selon un axe C sensiblement horizontal.

Le doigt 12 possède une glissière 18 s'étendant dans la longueur dudit doigt 12 et le support 13 possède également au moins une glissière 19. Avantageusement, chaque support possède une glissière 19 symétrique par rapport à l'axe de symétrie du support 13. Un axe d'actionnement 20 est engagé dans la glissière 18 du doigt 12 et dans la (les) glissière (s) 19 du support 20. L'axe d'actionnement 20 est entraîné dans les glissières 18, 19 par un actionneur afin de permettre le basculement du doigt par rapport à l'axe C. Dans le mode de réalisation représenté le mouvement de l'actionneur 21 est transmis au moyen d'un dispositif de transmission 22 tel qu'une tringle.

Lorsque le doigt de verrouillage 12 est en position déverrouillée, représentée sur la figure 1, l'axe d'actionnement 20 est disposé à l'extrémité avant de la glissière 19 et à l'extrémité supérieure de la glissière 18. Lorsque le doigt 23 est en position verrouillée (figure 3), l'axe d'actionnement est situé à l'extrémité arrière de la glissière 19 et à l'extrémité inférieure de la glissière 18.

La (les) glissière (s) 19 du support possède une forme particulière permettant de stabiliser la position de verrouillage du doigt 12. En effet, dans une partie avant de la glissière 19, la glissière 19 possède une pente permettant d'entraîner la rotation du doigt vers sa position verrouillée alors que vers l'extrémité arrière de la glissière, la pente s'inverse. Ainsi, sans mouvement de l'actionneur, le doigt de verrouillage 12 est bloqué dans sa position verrouillée.

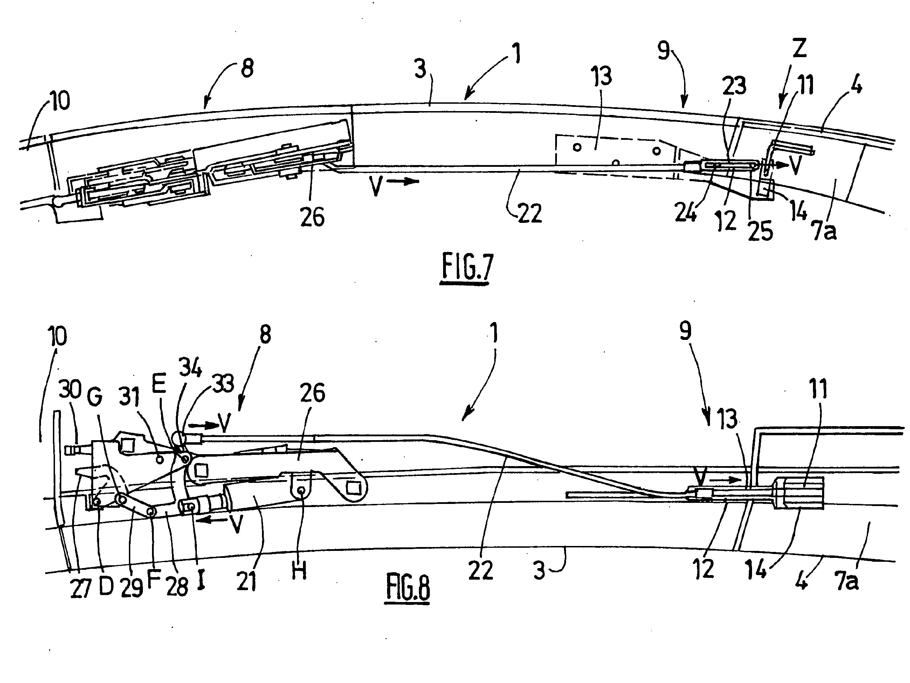

Dans un second mode de réalisation représenté sur les figures 7 et 8, le doigt de verrouillage 12 est un doigt monté coulissant sur le support 13.

A cet effet, le doigt coulissant 12 est muni d'une glissière 23 s'étendant dans la longueur dudit doigt 12. Le support 13 possède deux pions de guidage 24, 25 engagés dans ladite glissière 23 et permettant de guider le mouvement du doigt 12. De façon équivalente, on pourra également prévoir que le doigt de verrouillage 12 possède deux pions de guidage mobiles dans une glissière solidaire du support 13.

Dans un mode de réalisation, la surface du doigt 12 en contact avec la gâche 11 est biseautée de manière à ce que la force de verrouillage exercée par le doigt 12 sur la gâche 11 augmente progressivement lors du mouvement de coulissement du doigt de verrouillage 12.

Afin d'obtenir, les mêmes effets, on peut également prévoir que la glissière 23 formée dans le doigt de verrouillage 21 soit inclinée. Le bord avant de ladite glissière 23 est situé au-dessus du bord arrière de la glissière 23 afin d'appliquer sur la gâche 12 une force dirigée du haut vers le bas lors du verrouillage.

Un actionneur 21 ou un dispositif de transmission 22 du mouvement est monté solidaire de l'extrémité avant du doigt 12 afin d'entraîner le coulissement de celui-ci. Dans le mode de réalisation représenté, un dispositif de transmission du mouvement 22 tel qu'une tringle permet de transmettre le mouvement de l'actionneur 21 au doigt de verrouillage 22.

Dans un troisième mode de réalisation représenté sur les figures 9 et 10, la gâche 11 est montée solidaire d'une biellette d'articulation 35 de l'élément latéral 7a, 7b sur l'élément central 6. Le doigt 12 est coulissant sur le support 2 comme dans le deuxième mode de réalisation et possède à son extrémité arrière un pion tronconique 36 s'engageant dans un orifice 37 de forme complémentaire formant la gâche 11. Ce mode de réalisation particulier permet un positionnement précis des éléments latéraux 7a, 7b.

Par la suite, nous décrirons de façon détaillée le dispositif de verrouillage avant 8 de l'élément de toit avant 3 sur une partie fixe 10 de la carrosserie du véhicule qui est représenté de manière plus détaillée sur les figures 2 et 8. Un tel dispositif de verrouillage est décrit dans la demande de brevet français FR 650881 non encore publiée.

Dans le mode de réalisation représenté de l'invention, ledit dispositif permet de maintenir l'élément de toit avant 3 contre la traverse 10 de pare-brise du véhicule.

A cet effet, le dispositif de verrouillage avant 8 de l'élément de toit avant 3 sur la traverse de pare-brise 12 comprend un support 26 solidaire du toit escamotable, un crochet mobile 27, un actionneur 21 et des moyens de transmission du mouvement de l'actionneur 21 au crochet 27. Le crochet 27 est monté en rotation sur le support 26 autour d'un premier axe D entre une position verrouillée sur une gâche, non représenté, solidaire de la traverse 12 de pare-brise et une position déverrouillée.

Lorsque le crochet 27 est en position verrouillée, la force de verrouillage exercée par le crochet 27 sur la gâche permet de maintenir le bord avant de l'élément de toit avant 3 plaqué contre la traverse 10 de pare-brise. Ainsi, l'étanchéité entre le toit et la traverse 10 est réalisée de manière satisfaisante et le toit est immobilisé par rapport au véhicule.

Les moyens de transmission du mouvement sont composés de deux biellettes 28, 29. La première biellette 28 est montée d'une part en rotation sur le support autour d'un deuxième axe E et d'autre part montée articulée sur la seconde biellette 29 autour d'un troisième axe F. La seconde biellette 29 est montée en rotation sur le crochet 27 autour d'un quatrième axe G.

L'actionneur 21 est par exemple un actionneur linéaire composé d'une tige mobile en translation par rapport au corps de l'actionneur 21. Le corps de l'actionneur 21 est monté en rotation sur le support autour d'un cinquième axe H et la tige est montée en rotation sur la première biellette autour d'un sixième axe I .

Des moyens de positionnement 30 permettent de guider latéralement et verticalement le toit vers sa position de recouvrement contre la traverse de pare-brise.

La tige de l'actionneur 21 est entraînée en translation par rapport au corps de l'actionneur et provoque ainsi une poussée sur la première biellette 28. Ainsi, la première biellette 28 est entraînée en rotation autour du deuxième axe E. La rotation de la première biellette 28 est transmise au crochet 27 par l'intermédiaire de la seconde biellette 29 et le crochet 27 est entraîné en rotation autour du premier axe D et se déplace vers sa position de verrouillage.

Lors du mouvement du crochet 27 de sa position déverrouillée vers sa position verrouillée, le troisième axe F passe de l'autre côté du plan passant par le deuxième E et le quatrième axe G. Dans cette disposition, si un effort est exercé sur le crochet 27 de manière à l'entraîner en rotation vers sa position déverrouillée, la première 28 et la seconde biellette 29 sont entraînées en rotation dans le sens contraire à leur mouvement de déverrouillage. Cependant, une butée 31 permet d'arrêter le mouvement de la première 28 ou deuxième biellette 29. Pour permettre, le déverrouillage, il faut qu'une force soit exercée par l'actionneur 21 sur la première biellette 28 de manière à ce que le troisième axe F repasse de l'autre côté du plan mentionné ci-dessus.

Ainsi, les moyens de transmission sont dans une position stable lorsque le dispositif de verrouillage est dans sa position verrouillée.

Avantageusement, le support 26 est formé de deux plaques embouties montées l'une sur l'autre. Les deux plaques portent pris entre elles l'ensemble des pivots D à 1 de l'actionneur 21, du crochet 27 et des deux biellettes 28, 29. Les deux plaques forment une sorte de boîtier de manière à constituer un ensemble compact ayant une forme allongée. Cette construction particulière permet de réaliser un dispositif de verrouillage 8 de faible encombrement. Dans le mode de réalisation représenté, les plaques du support 26 sont disposées horizontalement et sont fixées contre la paroi intérieure de l'élément de toit avant 3.

Dans un mode de réalisation de l'invention, le système de verrouillage 1 comprend un unique actionneur 21 permettant d'entraîner le verrouillage du doigt de verrouillage 21 du dispositif de verrouillage arrière 9 et de l'organe de verrouillage 27 du dispositif de verrouillage avant 8.

Par conséquent, un dispositif de transmission 22 du mouvement est agencé pour transmettre le mouvement de l'actionneur 21 du dispositif de verrouillage avant 8 vers le dispositif de verrouillage arrière 9 ou du dispositif de verrouillage arrière 9 vers le dispositif de verrouillage avant 8.

Dans le mode de réalisation représenté, l'actionneur 21 est monté sur le support 26 du dispositif de verrouillage avant 8 et le dispositif de transmission 22 permet de transmettre le mouvement au doigt 22 de verrouillage du dispositif de verrouillage arrière 9. Le dispositif de transmission 22 est composé de moyen de transmission « positif », tel qu'une tringle, permettant de transmettre l'intégralité du mouvement de l'actionneur 21.

Dans le premier mode de réalisation des figures 1, 2 et 3, la tringle 22 est montée d'une part solidaire de l'axe d'actionnement 20 du dispositif de verrouillage arrière 9 et d'autre part monté articulé sur la première biellette 28. Dans ce mode de réalisation, la première biellette 28 possède une extrémité 32 faisant saillie à l'extrémité opposée de l'axe d'articulation E de la première biellette 28 sur le support 26. L'articulation 33 de la tringle 22 sur la première biellette 28 est disposée sur ladite extrémité 32. Ainsi, le dispositif de transmission du mouvement est agencé pour emporter l'extrémité inférieure du doigt de verrouillage 12 vers l'avant lors du verrouillage du dispositif de verrouillage avant 8.

Dans le second mode de réalisation des figures 7 et 8, la tringle 22 est montée d'une part solidaire du doigt 12 de verrouillage et d'autre part montée articulée sur la première biellette 28. Dans ce mode de réalisation, la première biellette 28 possède une extrémité 34 faisant saillie de l'autre côté de l'axe d'articulation E de la première biellette 28 sur le support 26 par rapport à l'axe d'articulation I de l'actionneur 21 sur la première biellette 28. Ainsi, le dispositif de transmission du mouvement est agencé pour pousser le doigt coulissant 12 vers l'arrière du véhicule lors du verrouillage du dispositif avant 8.

Le système de verrouillage 1 peut aisément être installé sur les parties latérales de l'élément de toit avant 3. On notera également que le système de verrouillage pourra avantageusement être utilisé pour un toit escamotable équipé ou non d'éléments latéraux.

Avantageusement, le véhicule automobile 2 est équipé de deux système 1 de verrouillage selon l'invention disposés à proximité des extrémités latérales du toit et disposés sensiblement longitudinalement au toit.

## Revendications

1. Dispositif de verrouillage (9) d'un toit escamotable de véhicule (2) automobile composé d'au moins un élément de toit avant (3) et d'un élément de toit arrière (4), l'élément de toit avant (3) étant monté articulé sur l'élément de toit arrière (4) et l'élément de toit arrière (4) étant monté articulé sur le châssis du véhicule (2), les éléments de toit avant (3) et arrière (4) étant mobiles entre une position de recouvrement de l'habitacle du véhicule (2) et une position escamotée vers le coffre arrière (5) du véhicule (2), l'élément de toit arrière (4) comprenant un élément central (6) et deux éléments latéraux (7a, 7b) disposés de part et d'autre de l'élément central (6) et montés articulés sur celui-ci, ledit dispositif de verrouillage étant **caractérisé en ce qu'**il comprend :
- une gâche (11) solidaire d'un élément de toit latéral (7a, 7b) ;
- un doigt de verrouillage (12) monté articulé sur un support (13) solidaire de l'élément de toit avant (3) entre une position déverrouillée et une position verrouillée dans laquelle ledit doigt (12) exerce sur la gâche (11) une force selon un axe Z dirigé vers le bas de manière à plaquer l'élément de toit latéral (7a, 7b) vers sa position de recouvrement en appui sur l'élément central (6) et/ou sur l'élément avant (3).

2. Dispositif de verrouillage (9) d'un toit escamotable selon la revendication 1, **caractérisé en ce qu'**il comprend en outre un premier (14) et un second organe (11) de positionnement respectivement solidaire de l'élément de toit avant (3) et solidaire de l'élément de toit latéral (7a, 7b) ; le second organe (11) venant en appui sur une zone d'appui du premier organe (14) sous l'effet de ladite force de verrouillage lorsque les éléments de toit (3, 4) sont en position de recouvrement, la zone d'appui étant traversée par l'axe Z et sensiblement perpendiculaire à celui-ci.

3. Dispositif de verrouillage (9) selon la revendication 1 ou 2, **caractérisé en ce que** l'axe Z est centré sur la zone d'appui du premier organe (14) de positionnement.

4. Dispositif de verrouillage (9) selon la revendication 1 à 3, **caractérisé en ce que** la gâche (11) forme le second organe de positionnement, le doigt de verrouillage (12) contraignant la gâche (11) contre le premier organe de positionnement (14) lorsque ledit doigt (12) est en position verrouillée.

5. Dispositif de verrouillage (9) selon l'une des revendications 1 à 4, **caractérisé en ce que** la gâche (11) possède sensiblement une forme de U dont les branches sont solidaires de l'élément de toit arrière (4).

6. Dispositif de verrouillage (9) selon la revendication 5, **caractérisé en ce que** le premier organe (14) possède un fond formant (15) ladite zone d'appui de la gâche (11) et des bords latéraux (16a, 16b) évasés permettant de positionner latéralement la gâche (11) afin de positionner latéralement l'élément de toit arrière (4) par rapport à l'élément de toit avant (3).

7. Dispositif de verrouillage (9) selon l'une des revendications 1 à 6, **caractérisé en ce que** le doigt (12) est un doigt monté coulissant sur le support (13).

8. Dispositif de verrouillage (9) selon la revendication 7, **caractérisé en ce que** le doigt coulissant (12) possède une glissière (23) et le support possède deux pions de guidage (24, 25) engagés dans ladite glissière (23) afin de guider le mouvement du doigt coulissant (12).

9. Dispositif de verrouillage (9) selon l'une des revendications 7 ou 8, **caractérisé en ce que** le doigt coulissant (12) possède une surface de contact avec la gâche (11) qui est biseautée.

10. Dispositif de verrouillage (9) selon l'une des revendications 1 à 6, **caractérisé en ce que** le doigt (12) est monté en rotation sur le support (13) selon un axe C.

11. Dispositif de verrouillage (9) selon la revendication 8, **caractérisé en ce que** le doigt (12) possède une glissière (18) et le support (13) possède au moins une glissière (19), un axe (20) commandé par ledit actionneur (21) étant mobile à la fois dans la glissière (18) du doigt (12) et dans la glissière (19) du support (13).

12. Dispositif de verrouillage selon la revendication 1 à 11, **caractérisé en ce que** la gâche (11) est montée sur une biellette d'articulation d'un élément de toit latéral (7a, 7b) sur l'élément de toit central (6).

13. Dispositif de verrouillage (9) selon l'une des revendications 1 à 12, **caractérisé en ce que** le support (13) est composé de deux plaques fixées l'une à l'autre dans une partie avant et s'écartant dans une partie arrière afin de former un logement pour le doigt de verrouillage (12).

14. Système de verrouillage (1) d'un toit escamotable de véhicule automobile (2) composé d'un élément de toit avant (3) et d'un élément de toit arrière (4), l'élément de toit avant (3) étant monté articulé sur l'élément de toit arrière (4) et l'élément de toit arrière (4) étant monté articulé sur le châssis du véhicule(2), les éléments de toit avant (2) et arrière (3) étant ainsi mobiles entre une position de recouvrement de l'habitacle du véhicule (2) et une position escamotée vers le coffre arrière (5) du véhicule (2), ledit système de verrouillage comprenant :
- un dispositif de verrouillage avant (8) de l'élément de toit avant (3) sur une partie fixe (10) du véhicule (2) comprenant :
- un support avant (26) solidaire de l'élément de toit avant (3) et disposé à proximité de son bord avant ;
- un organe de verrouillage (27) monté articulé sur ledit support avant (26) entre une position déverrouillée et une position verrouillée sur une gâche solidaire d'une partie fixe (10) du véhicule (2) ;
ledit système de verrouillage (1) étant **caractérisé en ce qu'**il comprend
- un dispositif de verrouillage arrière (9) de l'élément de toit avant (3) sur l'élément de toit arrière (4) comprenant :
- un support arrière (13) solidaire de l'élément de toit avant (3) disposé à proximité de son bord arrière ;
- une gâche (11) solidaire de l'élément de toit arrière (4) ;
- un doigt de verrouillage (12) monté articulé sur ledit support arrière (13) entre une position déverrouillée et une position verrouillée sur la gâche (11) ;
le dispositif de verrouillage avant (8) ou le dispositif de verrouillage arrière (9) est équipé d'un actionneur unique (21) permettant de commander le mouvement de verrouillage de l'organe de verrouillage (27) ou du doigt de verrouillage (12), ledit système de verrouillage (1) comprenant en outre un dispositif de transmission du mouvement (22) agencé pour transmettre le mouvement de l'actionneur (21) du dispositif de verrouillage avant (8) vers le dispositif de verrouillage arrière (9) ou du dispositif de verrouillage arrière (9) vers le dispositif de verrouillage avant (8).

15. Système de verrouillage (1) d'un toit escamotable de véhicule automobile selon la revendication 14 **caractérisé en ce que** le dispositif de verrouillage arrière (9) est un dispositif selon l'une des revendications 1 à 13.

16. Système de verrouillage (1) selon la revendication 14 ou 15, **caractérisé en ce que** l'actionneur (21) est monté sur le support (26) du dispositif de verrouillage avant (8).

17. Système de verrouillage (1) selon l'une des revendications 14 à 16, **caractérisé en ce que** le dispositif de verrouillage avant (8) comprend des moyens de transmission (28, 29) du mouvement de l'actionneur (21) à l'organe de verrouillage (27), lesdits moyens de transmission étant agencés pour être disposés dans une position stable dans laquelle les moyens de transmission ne peuvent se déplacer vers leur position déverrouillée sans un mouvement de l'actionneur (21) lorsque le dispositif de verrouillage avant est dans sa position verrouillée.

18. Système de verrouillage (1) selon la revendication 17, **caractérisé en ce que** le dispositif de transmission (22) est monté sur les moyens de transmission (28, 29) de l'actionneur (21) à l'organe de verrouillage (27).

19. Toit escamotable comprenant un élément de toit avant (3) et un élément de toit arrière (4), l'élément avant (3) étant monté articulé sur l'élément arrière (4) et l'élément arrière (4) étant monté articulé sur le châssis du véhicule (2), les éléments avant (3) et arrière (4) étant ainsi mobile entre une position de recouvrement de l'habitacle du véhicule et une position escamotée dans le coffre arrière (5) du véhicule (2), ledit toit escamotable étant **caractérisé en ce qu'**il est équipé d'un dispositif de verrouillage (9) selon l'une quelconque des revendications 1 à 13 ou d'un système de verrouillage (1) selon l'une quelconque des revendications 14 à 18.

20. Toit escamotable selon la revendication 19, **caractérisé en ce qu'**il comporte deux systèmes de verrouillage (1) disposés à proximité des bords latéraux dudit toit escamotable.

21. Toit escamotable selon l'une des revendications 19 ou 20, **caractérisé en ce que** l'élément de toit arrière (4) comprend un élément central (6) et deux éléments latéraux (7a, 7b) disposés de part et d'autre de l'élément central (6) et montés articulés sur celui-ci.

22. Véhicule automobile (2) **caractérisé en ce qu'**il est équipé d'un toit escamotable selon l'une quelconque des revendications 19 à 21.

## Claims

1. A device for locking a convertible roof (9) of a vehicle (2) composed of at least one front roof element (3) and one back roof element (4), the front roof element (3) being pivotally mounted on the rear roof element (4) and the rear roof element (4) being pivotally mounted on the frame of the vehicle (2), the front (3) and rear (4) roof elements being movable between a position covering the passenger compartment of the vehicle (2) and a position retracted towards the rear trunk (5) of the vehicle (2), the rear roof element (4) including a central element (6) and two side elements (7a, 7b) positioned on either side of the central element (6) and pivotally mounted thereon, said locking device being **characterised in that** it includes:
- a strike (11) which is integral with a side roof element (7a, 7b);
- a locking finger (12) pivotally mounted on a support (13) integral with the front roof element (3) between an unlocked position and a locked position wherein said finger (12) exerts on the strike (11) a force along an axis Z oriented downwards so as to press the side roof element (7a, 7b) towards the covering position thereof, bearing on the central element (6) and/or the front element (3).

2. A device (9) for locking a convertible roof according to claim 1, **characterised in that** it further includes a first (14) and a second (11) positioning member respectively integral with the front roof element (3) and integral with the side roof element (7a, 7b); the second member (11) bearing on a bearing area of the first member (14) under the effect of said locking force when the roof elements (3, 4) are in the covering position, the bearing zone being gone through by the axis Z and substantially perpendicular thereto.

3. A locking device (9) according to claim 1 or 2, **characterised in that** the axis Z is centred on the bearing area of the first positioning member (14).

4. A locking device (9) according to claim 1 to 3, **characterised in that** the strike (11) forms the second positioning member, the locking finger (12) forcing the strike (11) against the first positioning member (14) when said finger (12) is in the locked position.

5. A locking device (9) according to one of claims 1 to 4, **characterised in that** the strike (11) substantially has a U shape the branches of which are integral with the rear roof element (4).

6. A locking device (9) according to claim 5, **characterised in that** the first member (14) has a bottom (15) forming said bearing zone of the strike (11) and flared side edges (16a, 16b) making it possible to position the strike (11) laterally so as to position the rear roof element (4) laterally with respect to the front roof element (3).

7. A locking device (9) according to one of claims 1 to 6, **characterised in that** the finger (12) is a finger slidingly mounted on the support (13).

8. A locking device (9) according to claim 7, **characterised in that** the sliding finger (12) has a slide (23) and the support has two guiding pins (24, 15) engaged in said slide (23) so as to guide the movement of the sliding finger (12).

9. A locking device (9) according to one of claims 7 or 8, **characterised in that** the sliding finger (12) has a contact surface with the strike (11) which is bevelled.

10. A locking device (9) according to one of claims 1 to 6, **characterised in that** the finger (12) is rotatingly mounted on the support (13) along an axis C.

11. A locking device (9) according to claim 8, **characterised in that** the finger (12) has a slide (18) and the support (13) has at least one slide (19), with an axis (20) controlled by said actuator (21) being movable both in the slide (18) of the finger (12) and in the slide (19) of the support (13).

12. A locking device according to claim 1 to 11, **characterised in that** the strike (11) is mounted on a pivoting rod of a side roof element (7a, 7b) on the central roof element (6).

13. A locking device (9) according to one of claims 1 to 12, **characterised in that** the support (13) is composed of two plates fixed to one another in a front part and being positioned away from each other in a rear part so as to form a recess for the locking finger (12).

14. A locking system (1) for the convertible roof of a motor vehicle (2) composed of a front roof element (3) and a rear roof element (4), with the front roof element (3) being pivotally mounted on the rear roof element (4) and the rear roof element (4) being pivotally mounted on the frame of the vehicle (2), the front (2) and rear (3) roof elements thus being movable between a position covering the passenger compartment of the vehicle (2) and a position retracted towards the rear trunk (5) of the vehicle (2), said locking system including:
- a front locking device (8) of the front roof element (3) and a fixed part (10) of the vehicle (2) including:
- a front support (26) integral with the front roof element (3) and positioned close to the front edge thereof;
- a locking member (27) pivotally mounted on said front support (26) between an unlocked position and a locked position on a strike integral with a fixed part (10) of the vehicle (2);
said locking system (1) being **characterised in that** it includes
- a rear locking device (9) of the front roof element (3) on the rear roof element (4) including:
- a rear support (13) integral with the front roof element (3) positioned close to the rear edge thereof;
- a strike (11) integral with the rear roof element (4);
- a locking finger (12) pivotally mounted on said rear support (13) between an unlocked position and a locked position on the strike (11);
the front locking device (8) or the rear locking device (9) is provided with a single actuator (21) making it possible to control the locking movement of the locking member (27) or of the locking finger (12), said locking system (1) further including a movement transmission device (22) arranged so as to transmit the movement of the actuator (21) from the front locking device (8) to the rear locking device (9) or from the rear locking device (9) to the front locking device (8).

15. A locking system (1) of a convertible roof of the motor vehicle according to claim 14, **characterised in that** the rear locking device (9) is a device according to one of claims 1 to 13.

16. A locking system (1) according to claim 14 or 15, **characterised in that** the actuator (21) is mounted on the support (26) of the front locking device (8).

17. A locking system (1) according to one of claims 14 to 16, **characterised in that** the front locking device (8) includes means for transmitting (28, 29) the movement of the actuator (21) to the locking member (27), said transmission means being arranged to be positioned in a stable position wherein the transmission means cannot move to the unlocked position thereof without a movement of the actuator (21) when the front locking device is in its locked position.

18. A locking system (1) according to claim 17, **characterised in that** the transmission device (22) is mounted on the transmission means (28, 29) of the actuator (21) to the locking member (27).

19. A convertible roof including a front roof element (3) and a rear roof element (4), the front element (3) being pivotally mounted on the rear element (4) and the rear element (4) being pivotally mounted on the frame of the vehicle (2), the front (3) and rear (4) elements thus being movable between a position covering the passenger compartment of the vehicle and a position retracted in the rear trunk (5) of the vehicle (2), said convertible roof being **characterised in that** it is provided with a locking device (9) according to any one of claims 1 to 13 and a locking system (1) according to any one of claims 14 to 18.

20. A convertible roof according to claim 19, **characterised in that** it includes two locking systems (1) positioned closed to the side edges of said convertible roof.

21. A convertible roof according to one of claims 19 or 20, **characterised in that** the rear roof element (4) includes a central element (6) and two side elements (7a, 7b) positioned on either side of the central element (6) and pivotally mounted thereon.

22. A motor vehicle (2) **characterised in that** it is provided with a convertible roof according to any one of claims 19 to 21.

## Patentansprüche

1. Vorrichtung zur Verriegelung (9) eines versenkbaren Daches eines Fahrzeugs (2), das aus mindestens einem vorderen Dachelement (3) und einem hinteren Dachelement (4) besteht, wobei das vordere Dachelement (3) gelenkig auf das hintere Dachelement (4) montiert ist und das hintere Dachelement (4) gelenkig auf den Rahmen des Fahrzeugs (2) montiert ist, wobei das vordere Dachelement (3) und das hintere Dachelement (4) zwischen einer Position mit Überdachung des Fahrgastraums des Fahrzeugs (2) und einer in den hinteren Kofferraum (5) des Fahrzeugs (2) versenkten Position beweglich sind, wobei das hintere Dachelement (4) ein mittleres Element (6) und zwei seitliche Elemente (7a, 7b) umfaßt, die zu beiden Seiten des mittleren Elements (6) angeordnet sind und gelenkig darauf montiert sind, wobei die besagte Verriegelungsvorrichtung **dadurch gekennzeichnet ist, daß** sie folgende Teile umfaßt:
- Eine Raste (11), die fest mit einem seitlichen Dachelement (7a, 7b) verbunden ist;
- Einen Verriegelungszapfen (12), der gelenkig auf einen Träger (13) montiert ist, der fest mit dem vorderen Dachelement (3) zwischen einer entriegelten Position und einer verriegelten Position verbunden ist, in der der besagte Zapfen (12) auf die Raste (11) eine Kraft in einer nach unten gerichteten Z-Achse ausübt, so daß das seitliche Dachelement (7a, 7b) fest auf seine Abdeckungsposition mit Auflage auf dem mittleren Element (6) und/oder auf das vordere Element (3) gedrückt wird.

2. Vorrichtung zur Verriegelung (9) eines versenkbaren Daches nach Anspruch 1, **dadurch gekennzeichnet, daß** es ferner ein erstes (14) und ein zweites Positionierungsorgan (11) umfaßt, von denen jeweils eins fest mit dem vorderen Dachelement (3) und das andere fest mit dem seitlichen Dachelement (7a,7b) verbunden ist; Wobei das zweite Element (11) sich unter der Auswirkung der besagten Verriegelungskraft auf eine Auflagezone des ersten Organs (14) stützt, wenn die Dachelemente (3, 4) in Abdeckungsposition sind, wobei die Auflagezone von der Z-Achse durchquert wird und sie deutlich senkrecht dazu stehen.

3. Verriegelungsvorrichtung (9) nach Anspruch 1 oder 2, **dadurch gekennzeichnet, daß** die Z-Achse auf der Auflagezone des ersten Positionierungsorgans (14) zentriert ist.

4. Verriegelungsvorrichtung (9) nach einem beliebigen der vorstehenden Ansprüche 1 bis 3, **dadurch gekennzeichnet, daß** die Raste (11) das zweite Positionierungsorgan bildet, wobei der Verriegelungszapfen (12) die Raste (11) gegen das erste Positionierungsorgan (14) zwingt, wenn der besagte Zapfen (12) in verriegelter Position ist.

5. Verriegelungsvorrichtung (9) nach einem beliebigen der vorstehenden Ansprüche 1 bis 4, **dadurch gekennzeichnet, daß** die Raste (11) deutlich eine U-Form besitzt, deren Zweige fest mit dem hinteren Dachelement (4) verbunden sind.

6. Verriegelungsvorrichtung (9) nach Anspruch 5, **dadurch gekennzeichnet, daß** das erste Organ (14) einen Boden (15) besitzt, der die besagte Auflagezone der Raste (11) bildet, und sich erweiternde Seitenkanten (16a, 16b), mit denen die Raste (11) seitlich positioniert wird, damit das hintere Dachelement (4) im Verhältnis zum vorderen Dachelement (3) positioniert werden kann.

7. Verriegelungsvorrichtung (9) nach einem beliebigen der vorstehenden Ansprüche 1 bis 6, **dadurch gekennzeichnet, daß** der Zapfen (12) ein gleitend auf den Träger (13) montierter Zapfen ist.

8. Verriegelungsvorrichtung (9) nach Anspruch 7, **dadurch gekennzeichnet, daß** der Gleitzapfen (12) eine Gleitschiene (23) besitzt und der Träger zwei Führungsmetallstücke (24, 25) besitzt, die in die besagte Gleitschiene (23) eingreifen, um die Bewegung des Gleitzapfens (12) zu führen.

9. Verriegelungsvorrichtung (9) nach einem beliebigen der vorstehenden Ansprüche 7 oder 8, **dadurch gekennzeichnet, daß** der Gleitzapfen (12) eine Kontaktfläche mit der Raste (11) besitzt, die abgefast ist.

10. Verriegelungsvorrichtung (9) nach einem beliebigen der vorstehenden Ansprüche 1 bis 6, **dadurch gekennzeichnet, daß** der Zapfen (12) drehend auf den Träger (13) auf einer C-Achse montiert ist.

11. Verriegelungsvorrichtung (9) nach Anspruch 8, **dadurch gekennzeichnet, daß** der Zapfen (12) eine Gleitschiene (18) besitzt und der Träger (13) mindestens eine Gleitschiene (19)besitzt, wobei eine vom besagten Betätigungsglied (21) gesteuerte Achse (20) sowohl in der Gleitschiene (18) des Zapfens (12) als auch in der Gleitschiene (19) des Trägers (13) beweglich ist.

12. Verriegelungsvorrichtung (9) nach einem beliebigen der vorstehenden Ansprüche 1 bis 11, **dadurch gekennzeichnet, daß** die Raste (11) auf eine Gelenkanlenkstange eines seitlichen Dachelements (7a, 7b) auf dem mittleren Dachelement (6) montiert ist.

13. Verriegelungsvorrichtung (9) nach einem beliebigen der vorstehenden Ansprüche 1 bis 12, **dadurch gekennzeichnet, daß** der Träger (13) aus zwei Platten besteht, die in einem vorderen Teil aneinander befestigt sind und sich in einem hinteren Teil voneinander entfernen, um eine Aufnahme für den Verriegelungszapfen (12) zu bilden.

14. Verriegelungssystem (1) eines versenkbaren Daches eines Kraftfahrzeugs (2), das aus einem vorderen Dachelement (3) und einem hinteren Dachelement (4) besteht, wobei das vordere Dachelement (3) gelenkig auf das hintere Dachelement (4) montiert ist und das hintere Dachelement (4) gelenkig auf den Fahrzeugrahmen (2) montiert ist, wobei das vordere (3) und das hintere (4) Dachelement somit zwischen einer Position mit Abdeckung des Fahrgastraums des Fahrzeugs (2) und einer in den hinteren Kofferraum (5) des Fahrzeugs (2) abgesenkten Position beweglich sind, wobei das besagte Verriegelungssystem folgende Teile umfaßt:
- Eine vordere Verriegelungsvorrichtung (8) des vorderen Dachelements (3) auf einem feststehenden Teil (10) des Fahrzeugs (2) mit:
- einem vorderen Träger (26), der fest mit dem vorderen Dachelement (3) verbunden und in der Nähe seiner Vorderkante angeordnet ist;
- einem Verriegelungsorgan (27), das gelenkig auf den besagten vorderen Träger (26) zwischen einer entriegelten Position und einer verriegelten Position auf eine fest mit einem feststehenden Teil (10) des Fahrzeugs (2) verbundenen Raste montiert ist;
Wobei das besagte Verriegelungssystem (1) **dadurch gekennzeichnet ist, daß** es folgende Teile umfaßt:
- eine hintere Verriegelungsvorrichtung (9) des vorderen Dachelements (3) auf dem hinteren Dachelement (4), die folgende Teile umfaßt:
- einen hinteren Träger (13), der fest mit dem vorderen Dachelement (3) verbunden und in der Nähe seiner Hinterkante angeordnet ist;
- eine Raste (11), die fest mit dem hinteren Dachelement (4) verbunden ist;
- einen Verriegelungszapfen (12), der gelenkig auf den besagten hinteren Träger (13) zwischen einer entriegelten Position und einer verriegelten Position auf der Raste (11) montiert ist;
Die vordere Verriegelungsvorrichtung (8) oder die hintere Verriegelungsvorrichtung (9) ist mit einem einzigen Betätigungsglied (21) ausgerüstet, mit dem die Bewegung der Verriegelung des Verriegelung-sorgans (27) oder des Verriegelungszapfens (12) gesteuert werden kann, wobei das besagte Verriegelungssystem (1) ferner eine Vorrichtung zur Übertragung der Bewegung (22) umfaßt, die so gestaltet ist, daß sie die Bewegung des Betätigungsglieds (21) der vorderen Verriegelungsvorrichtung (8) zur hinteren Verriegelungsvorrichtung (9) oder der hinteren Verriegelungsvorrichtung (9) zur vorderen Verriegelungsvorrichtung (8) überträgt.

15. Verriegelungssystem (1) eines versenkbaren Daches eines Kraftfahrzeugs (2) nach Anspruch 14, **dadurch gekennzeichnet, daß** die hintere Verriegelungsvorrichtung (9) eine Vorrichtung nach einem der Ansprüche 1 bis 13 ist.

16. Verriegelungssystem (1) nach Anspruch 14 oder 15, **dadurch gekennzeichnet, daß** das Betätigungsglied (21) auf den Träger (26) der vorderen Verriegelungsvorrichtung (8) montiert ist.

17. Verriegelungssystem (1) nach einem beliebigen der vorstehenden Ansprüche 14 bis 16, **dadurch gekennzeichnet, daß** das vordere Verriegelungselement (8) Mittel zur Übertragung (28, 29) der Bewegung des Betätigungsglieds (21) an das Verriegelungselement (27) umfaßt, wobei die besagten Übertragungsmittel so gestaltet sind, daß sie in einer stabilen Position angeordnet werden, in der die Übertragungsmittel sich ohne eine Bewegung des Betätigungsglieds (21) nicht zu ihrer entriegelten Position verschieben können, wenn das vordere Verriegelungselement in seiner verriegelten Position ist.

18. Verriegelungssystem (1) nach Anspruch 17, **dadurch gekennzeichnet, daß** die Übertragungsvorrichtung (22) auf die Übertragungsmittel (28, 29) des Betätigungsglieds (21) an das Verriegelungsorgan (27) montiert ist.

19. Versenkbares Dach, das ein vorderes Dachelement (3) und ein hinteres Dachelement (4) umfaßt, wobei das vordere Element (3) gelenkig auf das hintere Element (4) montiert ist und das hintere Element (4) gelenkig auf den Fahrzeugrahmen (2) montiert ist, wobei das vordere (3) und das hintere (4) Element somit zwischen einer Position mit Abdeckung des Fahrgastraums des Fahrzeugs und einer in den hinteren Kofferraum (5) des Fahrzeugs (2) versenkten Position beweglich sind, wobei das besagte versenkbare Dach **dadurch gekennzeichnet ist, daß** es mit einem Verriegelungselement (9) nach einem beliebigen der vorstehenden Ansprüche 1 bis 13 oder einem Verriegelungselement (1) nach einem beliebigen der vorstehenden Ansprüche 14 bis 18 ausgerüstet ist.

20. Versenkbares Dach nach Anspruch 19, **dadurch gekennzeichnet, daß** es zwei Verriegelungselemente (1) umfaßt, die in der Nähe der Seitenkanten des besagten versenkbaren Daches angeordnet sind.

21. Versenkbares Dach nach einem beliebigen der vorstehenden Ansprüche 19 oder 20, **dadurch gekennzeichnet, daß** das hintere Dachelement (4) ein mittleres Element (6) und zwei seitliche Elemente (7a, 7b) umfaßt, die zu beiden Seiten des mittleren Elements (6) angeordnet sind und gelenkig darauf montiert sind.

22. Kraftfahrzeug (2), **dadurch gekennzeichnet, daß** es mit einem versenkbaren Dach nach einem beliebigen der vorstehenden Ansprüche 18 bis 21 ausgerüstet ist.
